# EUROPEAN PATENT APPLICATION

(11) **EP 3 734 967 A1**
(43) Date of publication of application: **04.11.2020**
(21) Application number: 18895218.8
(22) Date of filing: 23.08.2018
(51) Int. Cl.: H04N 7/15

(54) **VIDEO CONFERENCE TRANSMISSION METHOD AND APPARATUS, AND MCU**

(30) Priority: 28.12.2017 CN 201711458953
(71) Applicant: ZTE Corporation, Shenzhen City, Guangdong 518057 (CN)
(72) Inventor: MENG, Jun, Shenzhen City, Guangdong 518057 (CN)
(74) Representative: Lavoix
(86) International application number: PCT/CN2018/101956
(87) International publication number: WO 2019/128266

(57) **Abstract**

Provided is a video conference transmission method and apparatus, and an MCU. The method includes: instructing to send video data of a first terminal participating in a video conference to a multicast address of the video conference, and audio data of the first terminal to a multipoint control unit, MCU; and instructing a conference terminal except the first terminal in the video conference to send audio data of the conference terminal to the MCU.

## Description

This application claims priority to Chinese patent application No. 201711458953.2 filed on December 28, 2017, disclosure of which is incorporated herein by reference in its entirety.

### TECHNICAL FIELD

The present disclosure relates to the field of communications, for example, a video conference transmission method and apparatus, and an MCU.

### BACKGROUND

A video conference system in the related art is a long-distance communication system supporting a bidirectional transmission of voice and video. Through this system, users in different places can complete real-time voice and video communication which is similar to face-to-face communication.

Dividing from a device level, the video conference system must have a video conference terminal and a multipoint control unit (MCU). The terminal is a device used by the user. The terminal collects the user's voice and video data and sends it to a remote end via the network while receiving the voice and video data of the remote end from the network and playing it to the user. The MCU is responsible for multi-party conference management, exchange and mixing for the conference terminal voice and video data.

The video conference in the related art mostly uses IP networks for data transmission of the video conference. For the video conference with a high real-time requirement, higher bandwidth is able to transmit more data, thereby providing a better service quality. For a local area network, the bandwidth can generally be met as needed, but for the Internet or a rental private wire network, bandwidth resources are very limited. The higher bandwidth requires higher usage cost from the user. Generally, a video conference network mode is that each video terminal establishes a connection with the MCU. The terminal uploads audio and video data of the terminal itself to the MCU. The MCU downloads audio and video data of the conference to the terminal. Each terminal needs to occupy uplink and downlink symmetric bandwidths. For example, if 100 conference terminals are provided in the conference and the conference bandwidth is 2M, uplink bandwidth and downlink bandwidth of the MCU are respectively 200M. With information construction, there is an increasing demand for holding distance education, corporate conferences and government work conferences through the video conference. High bandwidth is costly for non-LAN users. If the users, such as users at sea, users for exploration, and users in military, move outdoors all year round, satellite or wireless networks are needed, which are basically impossible to achieve such high bandwidth.

In view of the above phenomena existing in the related art, no solution capable of avoiding the above situations has yet been proposed.

### SUMMARY

The following is a summary of the subject matter described herein in detail. This summary is not intended to limit the scope of the claims.

Embodiments herein provide a video conference transmission method and apparatus, and an MCU.

According to an embodiment of the present disclosure, a video conference transmission method is provided. The method includes: instructing to send video data of a first terminal participating in a video conference to a multicast address of the video conference, and send audio data of the first terminal to a multipoint control unit (MCU); and instructing a conference terminal except the first terminal in the video conference to send audio data of the conference terminal to the MCU.

According to an embodiment of the present disclosure, another video conference transmission method is provided. The method includes: receiving audio data of all participating terminals in a video conference and video data of a first terminal in all participating terminals; and sending the audio data to all participating terminals, and sending the video data to a terminal except the first terminal in the video conference.

According to another embodiment, a multipoint control unit (MCU) is provided. The MCU includes: a first instruction module, which is configured to instruct to send video data of a first terminal participating in a video conference to a multicast address of the video conference, and send audio data of the first terminal to a multipoint control unit (MCU); and a second instruction module, which is configured to instruct a conference terminal except the first terminal in the video conference to send audio data of the conference terminal to the MCU.

According to another embodiment of the present disclosure, another video conference transmission apparatus is provided. The apparatus includes: a receiving module, which is configured to receive audio data of all participating terminals in a video conference and video data of a first terminal in all participating terminals; and a sending module, which is configured to send the audio data to all participating terminals, and send the video data to a terminal except the first terminal in the video conference.

Another embodiment of the present disclosure further provides a storage medium. The storage medium stores computer programs which, when executed, perform the steps of any one of the method embodiments described above.

Another embodiment of the present disclosure further provides an electronic apparatus, including a memory and a processor. The memory is configured to store computer programs and the processor is configured to run the computer programs for executing the steps of any one of the method embodiments described above.

Other aspects can be understood after the drawings and the detailed description are read and understood.

### BRIEF DESCRIPTION OF DRAWINGS

The drawings described here are used for providing a further understanding of the present disclosure. In the drawings:
FIG. 1 is a network architecture diagram of an embodiment of the present disclosure;
FIG. 2 is a flowchart of a video conference transmission method according to an embodiment of the present disclosure;
FIG. 3 is a flowchart of a video conference transmission method according to another embodiment of the present disclosure;
FIG. 4 is a structural block diagram of a multipoint control unit (MCU) according to an embodiment of the present disclosure;
FIG. 5 is a structural block diagram of a video conference transmission apparatus according to an embodiment of the present disclosure;
FIG. 6 is a structural schematic diagram of a video conference system in an embodiment of the present disclosure;
FIG. 7 is a flowchart of holding a video conference under a low-bandwidth condition in an embodiment of the present disclosure;
FIG. 8 is a schematic diagram of a data flow of a low-bandwidth video conference in an embodiment of the present disclosure;
FIG. 9 is a working flowchart of opening a multicast media channel in a sending direction in a low-bandwidth video conference in an embodiment of the present disclosure;
FIG. 10 is a working flowchart of a video conference changing a broadcast source in an embodiment of the present disclosure; and
FIG. 11 is a working flowchart of a terminal watched by a video conference changing a broadcast source in an embodiment of the present disclosure.

### DETAILED DESCRIPTION

Hereinafter the present disclosure will be described in detail with reference to the drawings and in conjunction with embodiments.

It is to be noted that the terms "first", "second" and the like in the description, claims and drawings of the present disclosure are used to distinguish between similar objects and are not necessarily used to describe a particular order or sequence.

### Embodiment one

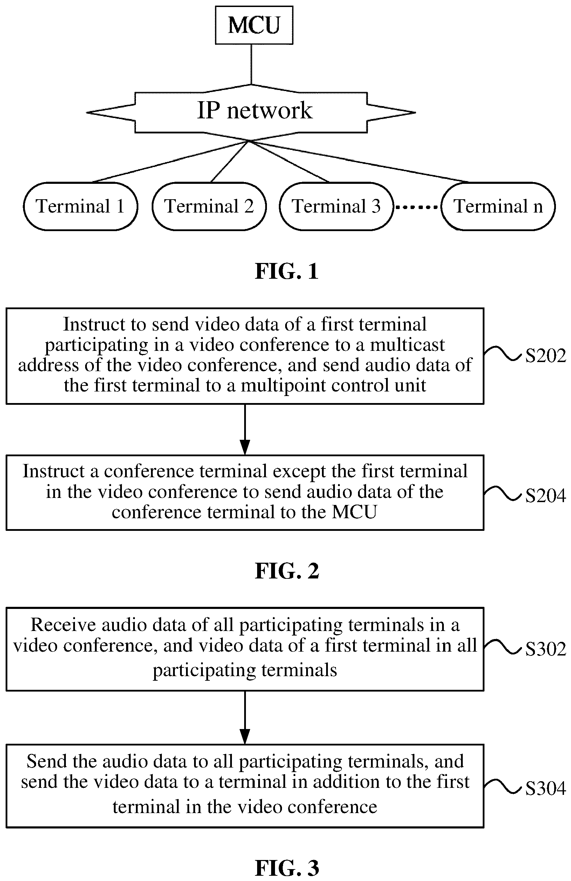

The embodiment of the present disclosure may run on a network architecture shown in FIG. 1, as shown in FIG. 1, FIG. 1 is a network architecture diagram of an embodiment of the present disclosure; the network architecture includes an MCU and at least one terminal. When holding a video conference, real-time audio and video interaction is performed between terminals through the MCU.

This embodiment provides a video conference transmission method operating on the network architecture described above. FIG. 2 is a flowchart of a video conference transmission method according to an embodiment of the present disclosure. As shown in FIG. 2, the method includes steps S202 and S204.

In step S202, video data of a first terminal participating in a video conference is instructed to be sent to a multicast address of the video conference, and audio data of the first terminal is instructed to be sent to a multipoint control unit (MCU).

In step S204, a conference terminal except the first terminal in the video conference is instructed to send audio data of the conference terminal to the MCU.

In above steps, through only sending the video data of the first terminal in the video conference to the multicast address, network resources used by a part of the terminals for sending the video data in the video conference are saved, so that a phenomenon that the video conference in the relevant art occupies too much network resources is avoided, the occupation of a network bandwidth is reduced, network congestion is reduced and a utilization rate of network resources is improved.

In an embodiment, the above steps may be executed by a video conference management device, a control device, an MCU, a server or the like, but it is not limited thereto.

In an embodiment, step S202 and step S204 may be executed in a reverse order, that is, step S204 may be executed before step S202.

In an embodiment, the method further includes: controlling the conference terminal to refuse to send uplink video data. This can be achieved by controlling an uplink bandwidth to be 0, not allocating the uplink bandwidth, or controlling the conference terminal not to send the uplink video data.

In an embodiment, the method further includes: sending video data of a second terminal participating in the video conference to the first terminal. The second terminal may be any terminal except the first terminal in the video conference, and may be designated or randomly assigned through a strategy. For example, sending the video data of the second terminal participating in the video conference to the first terminal includes sending the video data of the second terminal participating in the video conference to the MCU, and sending the video data to the first terminal through the MCU. Of course, the second terminal may directly send the video data to the first terminal.

In an embodiment, the video data of the first terminal includes: video data collected by the first terminal, and the video data of the second terminal received by the first terminal. The collected video data may be local video data of the first terminal collected by a camera and may be corresponding to a user of the first terminal; the received video data of the second terminal is external video data, which is uniformly broadcast to other terminals through the first terminal, and can reduce a transmission bandwidth.

In an embodiment, after instructing the conference terminal except the first terminal in the video conference to send the audio data of the conference terminal to the MCU, the method further includes: sending audio data received by the MCU to the first terminal and the conference terminal, and sending video data received by the multicast address to the conference terminal.

In an embodiment, sending the audio data received by the MCU to the first terminal and the conference terminal includes: mixing all audio data received by the MCU, and sending the mixed audio data to the first terminal and the conference terminal.

In an embodiment, after instructing to send the video data of the first terminal participating in the video conference to the multicast address of the video conference, the method further includes: determining a designated terminal currently in speaking in the video conference, and sending video data of the designated terminal to the multicast address. The designated terminal is, by default, the above-mentioned first terminal when the video conference starts. After the video conference starts, the designated terminal switches to a terminal corresponding to a user who needs a display screen according to the conference situation of the video conference, such as a terminal currently in speaking or a terminal corresponding to a rostrum.

In an embodiment, after determining the designated terminal in the video conference, the method further includes: controlling the first terminal to refuse to send the uplink video data.

In an embodiment, before instructing to send the video data of the first terminal participating in the video conference to the multicast address of the video conference, send the audio data of the first terminal to the MCU, the method further includes: creating the video conference and configuring the multicast address of the video conference.

In an embodiment, before instructing to send the video data of the first terminal participating in the video conference to the multicast address of the video conference, the method further includes: configuring at least one first terminal, where each of the at least one first terminal corresponds to a different position area, and may be applied in a distributed network.

In an embodiment, sending the video data received by the MCU to the conference terminal through a multicast address includes: encoding the video data received by the MCU to obtain video data in at least one format, where transmission bandwidths corresponding to video data in different formats are different; and sending the encoded video data to the conference terminal through at least one multicast address. The above method may be applied in a scenario of multiple terminals, conference terminals has different receiving bandwidths and viewing requirements, and may be implemented by sending video data of different resolutions.

This embodiment provides a video conference transmission method operating on the network architecture described above. FIG. 3 is a flowchart of another video conference transmission method according to an embodiment of the present disclosure. As shown in FIG. 3, the method includes steps S302 and S304.

In step S302, audio data of all participating terminals in a video conference is received, and video data of a first terminal in all participating terminals is received;
In step S304, the audio data is sent to all participating terminals, and the video data is sent to a terminal except the first terminal in the video conference.

From the description of the implementation modes described above, it will be apparent to those skilled in the art that the methods in the embodiments described above may be implemented by software plus a necessary general-purpose hardware platform. Based on this understanding, the solutions provided by the present disclosure substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, or the like) to execute the methods according to each embodiment of the present disclosure.

### Embodiment two

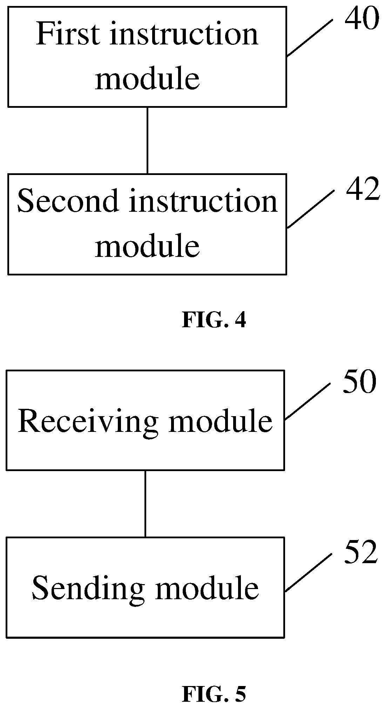

The embodiment further provides a video conference transmission apparatus, which is configured to implement the above-mentioned embodiment. What has been described will not be repeated. FIG. 4 is a structural block diagram of a multipoint control unit (MCU) according to an embodiment of the present disclosure. As shown in FIG. 4, the apparatus includes a first instruction module 40 and a second instruction module 42.

A first instruction module 40 is configured to instruct to send video data of a first terminal participating in a video conference to a multicast address of the video conference, and send audio data of the first terminal to a multipoint control unit (MCU).

A second instruction module 42 is configured to instruct a conference terminal except the first terminal in the video conference to send audio data of the conference terminal to the MCU.

FIG. 5 is a structural block diagram of a video conference transmission apparatus according to an embodiment of the present disclosure. As shown in FIG. 5, the apparatus further includes a receiving module 50 and a sending module 52.

The receiving module 50 is configured to receive audio data of all participating terminals in a video conference and video data of a first terminal in all participating terminals.

The sending module 52 is configured to send the audio data to all participating terminals, and send the video data to a terminal except the first terminal in the video conference.

The method steps in the above embodiments may be implemented in the apparatus of this embodiment through corresponding functional modules, which will not be repeated here.

It is to be noted that each module described above may be implemented by software or hardware. Implementation by hardware may, but may not necessarily, be performed in the following manners: the various modules described above are located in a same processor, or multiple modules described above are located in their respective processors in any combination form.

### Embodiment three

An embodiment of the present disclosure further describes the solution of the present disclosure in combination with scenarios.

An embodiment of the present disclosure provides a method and apparatus for large-scale network under a low-bandwidth condition in a multi-party video conference, thereby implementing a large-scale multi-party video conference network under the low-bandwidth condition, and avoiding a case where large-scale multi-party video conference cannot be held under extremely limited bandwidth resources provided in relevant video conference network.

The apparatus for video conference described in an embodiment of the present disclosure includes: a video conference MCU, a video conference service management system, and a conference terminal (where the conference terminal may include a conference-room-type hardware terminal, a personal computer (PC) soft terminal, and a web real-time communication (web RTC) terminal and a mobile device soft terminal, etc.), a video conference low-bandwidth control module.

An embodiment of the present disclosure uses network multicast, network unicast, and flow control technologies to control for implementing the large-scale low-bandwidth network from aspects of conference creation, conference holding, conference terminal access conference, video source control, and bandwidth control.

The method for large-scale multi-party video conference network under the low bandwidth condition provided by an embodiment of the present disclosure includes eight steps described below.

In a first step, a user creates a conference in the video conference service management system, selects the conference terminal, and designates the conference in a low-bandwidth conference mode. Here the "low-bandwidth conference" may have different description modes. The core content is to save bandwidth resources and the "low-bandwidth conference" is different from the conventional conference.

In a second step, the user configures low bandwidth conference parameters, including a multicast address, a primary video multicast port and a secondary video multicast port.

In a third step, the video conference service management system sends conference information to the MCU. The MCU calls each participant terminal to join in the conference, and instructs the terminal to control an uplink video flow through signaling during the process of calling the terminal.

In a fourth step, the video conference low bandwidth control module sets a first terminal participating in the conference (corresponding to the first terminal in the above embodiment) as a broadcast source, and instructs the broadcast source terminal to send video media data to a set multicast address and send audio data to the MCU, and sets an audio and video media receiving source of the terminal to be the MCU.

In a fifth step, the video conference low-bandwidth control module sets a second terminal participating in the conference as a terminal viewed by the broadcast source (corresponding to the second terminal in the above embodiment). Audio data and video data of the terminal viewed by the broadcast source are both sent to the MCU, the video data is forwarded by the MCU to the broadcast source terminal, and a video media receiving address is the multicast address.

In a sixth step, the video conference low bandwidth control module sets video media receiving addresses of terminals except the broadcast source terminal and the terminal viewed by the broadcast source terminal to be a set multicast address, where the audio data of the terminals is sent to the MCU, the video conference low bandwidth control module controls uplink video data of these terminals to be 0, that is, these terminals do not send the video data of these terminals to the MCU, and the audio data of all terminals is sent to each terminal after mixed at the MCU.

In a seventh step: when a speaking terminal is changed during the conference, the video conference low bandwidth control module restores a video uplink bandwidth of the currently speaking terminal to an original bandwidth, sets the video receiving address of the currently speaking terminal to be the MCU, controls the uplink video bandwidth of the original broadcast source terminal to be 0, and sets the video receiving address of the original broadcast source terminal to be the multicast address.

In an eighth step: when the terminal viewed by the broadcast source in the conference is changed, the video conference low bandwidth control module restores a video uplink bandwidth of the terminal currently viewed by the broadcast source to an original bandwidth, and at the same time controls the uplink video bandwidth of the terminal originally viewed by the broadcast source to be 0.

The step order of the above conference may be adjusted appropriately. For example, there may be different rules for initially selecting the broadcast source and the terminal viewed by the broadcast source, but two video sources of the conference cannot miss.

Using the method and apparatus described in this embodiment, the uplink bandwidth required for holding a conference is: a sum of two video bandwidths (bandwidths of the broadcast source and the terminal viewed by the broadcast source) and audio bandwidths of all terminals, and a downlink bandwidth is: a sum of one video bandwidth (bandwidth of the broadcast source) and the audio bandwidths of all terminals.

If a conference with 1000 terminals participating in and a conference bandwidth of 2M is held, the method and apparatus described in this embodiment are used, the uplink video bandwidth of the MCU is about 4M, and the downlink video bandwidth is about 4M. In the related art, the uplink bandwidth and downlink bandwidth of the MCU are both about 2000M.

Compared with the related art, the present disclosure may greatly reduce bandwidth resources required to hold the video conference. With the number of the terminals participating in the conference increasing, the required bandwidth only needs to increase a corresponding amount of audio bandwidths, which may alleviate large-scale video conference network needs when the bandwidth resources are short.

Compared with the related conference in a multicast mode, this embodiment may flexibly implement interaction between the terminals. Each conference terminal may be viewed by a main conference site or everyone as needed, and may also communicate by voice at any time. At the same time, since the uplink bandwidth of the conference terminal is managed by using a flow control technology, the uplink bandwidth in a direction of the video conference terminal to the MCU may be greatly reduced, where the conference terminal is a terminal except the broadcast source and the conference terminal viewed by the broadcast source.

The audio data of the conference may also be controlled in the same way as the video data to further reduce the bandwidth, but each conference terminal cannot speak at any time and requires manual control of the conference controller. This embodiment does not describe the processing to the audio part in detail.

The embodiment three also includes the following implementation examples.

### Implementation example one

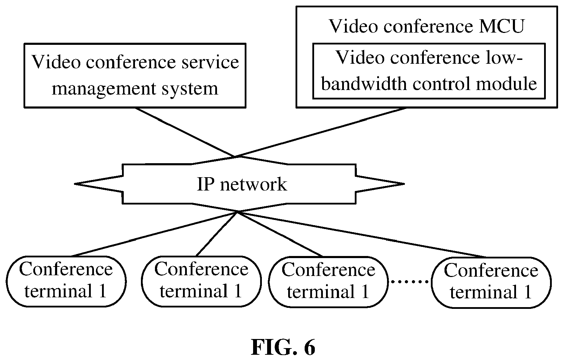

FIG. 6 is a structural schematic diagram of a video conference system of this embodiment. The entire system includes a video conference service management system, a video conference MCU, and a certain number of video conference terminals. A video conference low-bandwidth control module in the MCU is a newly added device of this embodiment.

The video conference service management system is an operation interface for holding the video conference, and a user convening the conference creates and manages the conference through the interface.

The multi-point control unit (MCU) of the video conference is a core device in the video conference and is mainly responsible for signaling and code stream processing with each video conference terminal or other MCUs.

After a conference TV terminal collects sound and video images and compresses the images by a video conference encoding algorithm, the conference TV terminal sends the compressed image to a remote MCU or a video conference terminal through an IP network. After receiving a code stream, a remote video conference terminal decodes the code stream and plays the decoded code stream to the user.

The video conference low-bandwidth control module of the video conference controls a video data bandwidth and a transmission direction of the terminal in the conference through a video conference standard protocol to reduce uplink and downlink bandwidths of the MCU, thereby implementing large-scale video conference under the low bandwidth condition.

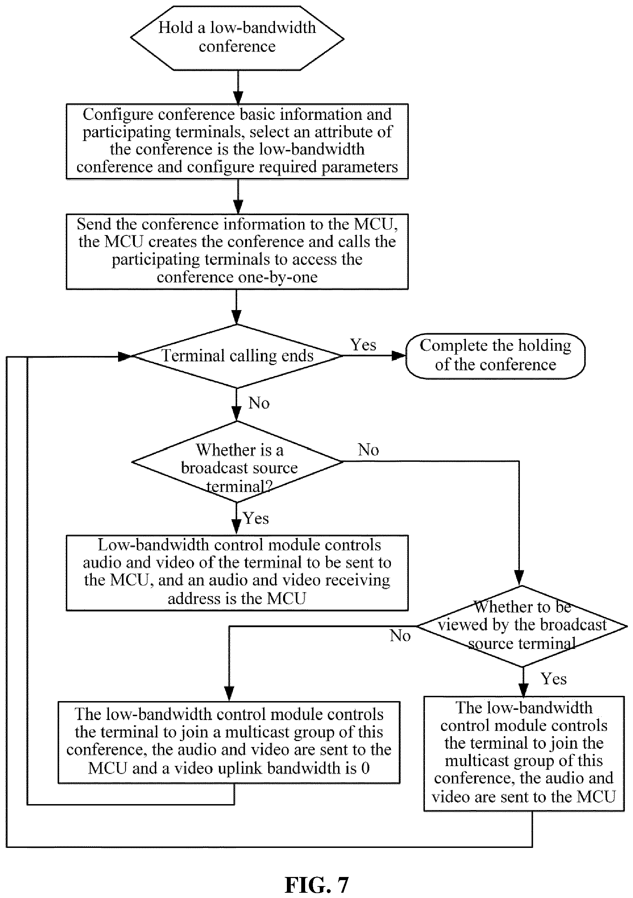

FIG. 7 is a flowchart of holding a video conference under a low-bandwidth condition of this embodiment.

The conference convener sets conference basic information such as a conference name, a conference bandwidth, an audio and video format and a list of terminals participating in the conference.

The conference convener sets information related to the low bandwidth control of the video conference, where the information includes a multicast address, a main video multicast port, a secondary video multicast port.

The conference service management system sends the conference information to the MCU, and the MCU holds the conference. The MCU allocates an MCU media and network processing resources according to the conference information.

The MCU creates a multicast group and calls terminals participating in the conference one by one to access the conference. According to a video conference rule, there are two main video sources in the conference: a broadcast source terminal and a terminal viewed by the broadcast source terminal. Videos of the broadcast source terminal are viewed by other terminals in the conference, and another terminal viewed by the broadcast source terminal is defined as the terminal viewed by the broadcast source. The two video sources may be dynamically switched to other terminals during the conference. When the MCU calls terminals preset in the conference to join the conference, a first terminal successfully being accessed is the broadcast source by default, a second terminal is the terminal viewed by the broadcast source by default, and other terminals are ordinary conference terminals.

When the first terminal accesses to the conference, the MCU configures the terminal to be the conference broadcast source. The video conference low-bandwidth control module notifies the terminal of sending the video data of the terminal to the MCU. The MCU forwards the video data of the broadcast source terminal to the multicast address after receiving the video data, so that the video data of the broadcast source terminal can be viewing by the terminal in a multicast group. When the second terminal accesses to the conference, the MCU configures the terminal to be the terminal viewed by the broadcast source of the conference. The video conference low-bandwidth control module notifies the second terminal of sending the video data to the MCU. The MCU sends the video data of the second terminal to the broadcast source terminal, so that the video data of the second terminal can be viewed by the broadcast source terminal. At the same time, the video conference low-bandwidth control module adds the second terminal to the multicast group, and the second terminal receives the video forwarded by the multicast address and plays the video.

When other terminals access to the conference, the MCU determines that the broadcast source and the terminal viewed by the broadcast source are already in the conference, then the video conference low-bandwidth control module directly adds them to the multicast group and controls the video uplink bandwidth of each of the other terminals to be 0, which means that the other terminals do not need to send the video data to the MCU, the other terminals accept and play the video of the conference multicast.

During the process of calling the terminal by the MCU, multicast attributes need to be instructed. Taking an H.323 protocol as an example (other communication protocols are also applicable), key parameters of a multicast capability set include a receive multipoint capability, a transmit multipoint capability and a receive and transmit multipoint capability, configuration are performed according to the terminal attribute such as whether the terminal is the broadcast source, whether the terminal is the terminal viewed by the broadcast source or whether the terminal is an ordinary terminal, and the configuration may be implemented by the following codes:

```
multiplexCapability: h2250Capability (4)
                      h2250Capability
                          maximumAudioDelayJitter: 60
                          receiveMultipointCapability
                               multicastCapability: True
                               multiUniCastConference: False
                               mediaDistributionCapability: 1 item
                                   Item 0
                                       Item
                                            centralizedControl: True
                                            distributedControl: False
                                            centralizedAudio: True
                                            distributedAudio: True
                                            centralizedVideo: True
                                            distributed Video: True
                          transmitMultipointCapability
                               multicastCapability: True
                               multiUniCastConference: False
                               mediaDistributionCapability: 1 item
                                   Item 0
                                       Item
                                           centralizedControl: True
                                            distributedControl: False
                                            centralizedAudio: True
                                            distributedAudio: True
                                            centralizedVideo: True
                                            distributed Video: True
                          receiveAndTransmitMultipointCapability
                               multicastCapability: True
                               multiUniCastConference: False
                               mediaDistributionCapability: 1 item
                                   Item 0
                                       Item
                                            centralizedControl: True
                                            distributedControl: False
                                            centralizedAudio: True
                                            distributedAudio: True
                                            centralizedVideo: True
                                            distributed Video: True
                          mcCapability
                               centralizedConferenceMC: False
                               decentralizedConferenceMC: False.
```

The audio data of all terminals in the conference is sent to the MCU and processed by the MCU as needed. The audio received by each terminal is the audio data synthesized by the MCU for each terminal.

In this case, the video conference under the low bandwidth is completed. It can be seen from the above process that no matter how many terminals participate in the conference, only two paths of video data are uploaded to the MCU, and the audio data to be uploaded is audios of all terminals. There are only two paths of video data sent by the MCU, and the audio data sent by the MCU is the audios of all terminals. So that the large-scale video conferences are held in a case where very low bandwidth of the MCU is occupied.

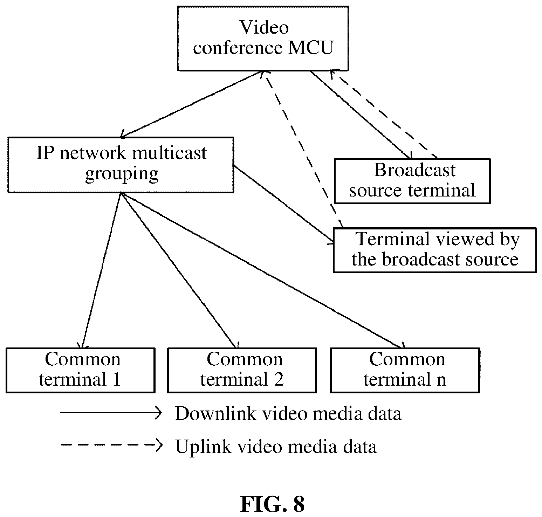

FIG. 8 is a schematic diagram of a data flow of a low-bandwidth video conference of this embodiment. Under the control of the video conference low-bandwidth control module, the video data of the broadcast source and the terminal viewed by the broadcast source in the conference is sent to the MCU, and the MCU sends the video data of the broadcast source terminal to the multicast address, and sends the video data of the terminal viewed by the broadcast source to the broadcast source terminal. The code stream received by other conference terminals is conference multicast data which does not need to be sent by the MCU. The audio data in the conference is still transmitted between the MCU and the video conference terminal in a traditional unicast mode.

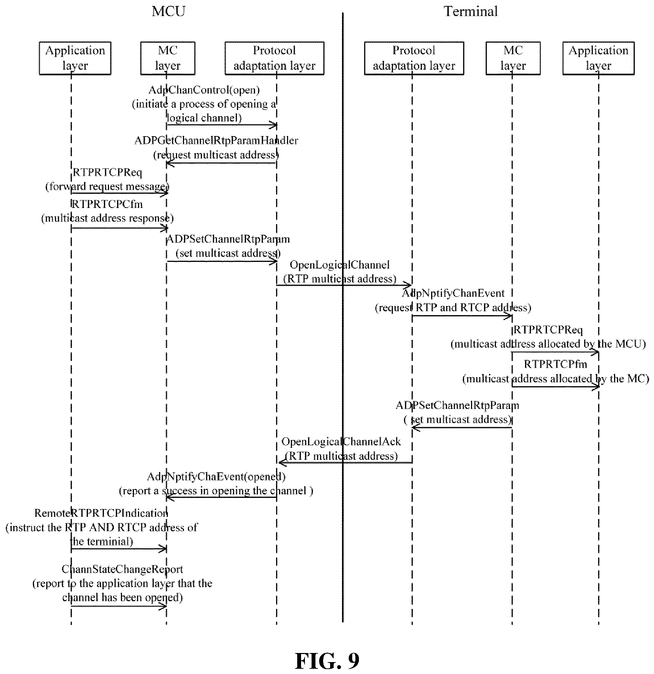

FIG. 9 is a working flowchart of opening a multicast media channel in a sending direction in a low-bandwidth video conference of this embodiment.

A multipoint controller (MC) layer (or a protocol stack) of the MCU initiates a process of opening a logical channel.

According to a master-slave decision result, a protocol stack determines whether the multicast address is allocated by the MCU itself. When the protocol stack is in a master state, and a protocol adaptation layer of the MCU requests a RTCP address from an upper layer, the upper layer is required to allocate a multicast address (a real time transport protocol (RTP) and a real time transport control protocol (RTCP).

The MC layer forwards a request message.

An application layer of the MCU checks a channel parameter. If multicast is supported and a real time transport protocol address (RTPAddress), a real time transport control protocol port (RTCPPort) and a real time transport protocol port (RTPPort) are all 0, then the multicast address is being requested and RTP and RTCP addresses are responded to the MC layer of the MCU, where the RTP and RTCP addresses are placed in an address information field of the MCU itself. Otherwise, the terminal has allocated the RTP and RTCP multicast addresses. The multicast address is given in fields of the RTPAddress, RTCPPort, and RTPPort. These multicast addresses are responded to the MC layer of the MCU.

The protocol stack sends an OpenLogicalChannel request, and the RTP and RTCP multicast addresses are given in a field of forwardLogicalChannelParameters.

A protocol adaptation layer of the terminal requests the RTP and RTCP addresses from the MC of the terminal. Since the MCU allocates the multicast address, the multicast address is reported to the MC layer of the terminal in the RTPAddress, RTCPPort, and RTPPort.

The application layer of the terminal checks the parameters. If multicast is supported and the RTPAddress, RTCPPort, and RTPPort are all 0, then the multicast address is requested and the RTP and RTCP addresses are responded to the MC layer of the terminal. The RTP and RTCP addresses are placed in the address information field of the terminal itself. Otherwise, the MCU has allocated the RTP and RTCP multicast addresses. The multicast address is given in fields of the RTPAddress, RTCPPort, and RTPPort. These multicast addresses are responded to the MC layer of the terminal.

The protocol stack of the terminal sends an OpenLogicalChannelAck message to the MCU whose RTP and RTCP addresses are the multicast address allocated by the MCU.

The protocol stack of the MCU reports to the application layer that the channel is opened successfully.

The MC layer of the MCU instructs the RTP and RTCP multicast addresses of the terminal to the application layer.

The MC layer of the MCU reports that the application layer channel has been opened to the application layer.

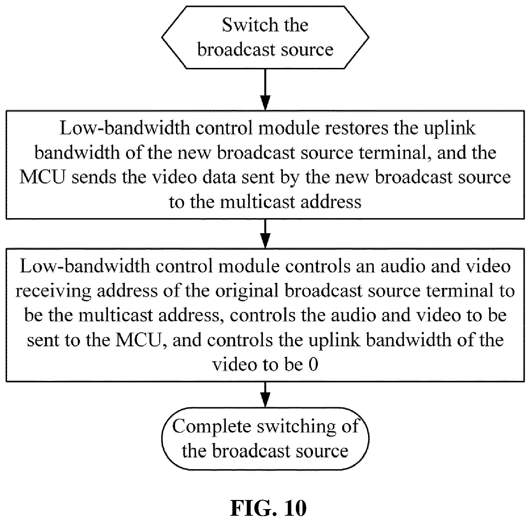

FIG. 10 is a working flowchart of a video conference changing a broadcast source of this embodiment. During the conference, the speaking terminal is switched as needed. When the speaking terminal is changed: the MCU sets the new speaking terminal as the broadcast source; the video conference low-bandwidth control module restores the uplink bandwidth of the new broadcast source terminal, and the new broadcast source terminal starts to send the video to the MCU; the video conference low-bandwidth control module controls the uplink bandwidth of the original broadcast source to be 0; the original broadcast source terminal is joined to the conference multicast group by the MCU and receives the video from the multicast address like other terminals; the MCU sends the video data sent by the new broadcast source to the multicast address. The other terminal sees the video of the new broadcast source. So that the switching of the broadcast source is completed.

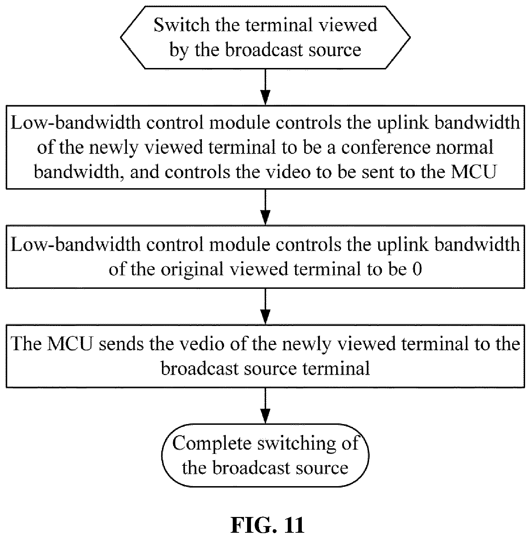

FIG. 11 is a working flowchart of a terminal watched by a video conference changing a broadcast source in an embodiment of the present disclosure. During the conference, the terminal viewed by the broadcast source is also switched as needs, such as dialogue interaction with a certain terminal. When the terminal viewed by the broadcast source is changed, the process includes that: the MCU sets a new terminal as a terminal currently viewed by the broadcast source; the video conference low-bandwidth control module restores the uplink bandwidth of the newly viewed terminal, and the video of the newly viewed terminal is sent to the MCU; the video conference low-bandwidth control module controls the uplink bandwidth of the terminal originally viewed by the broadcast source to be 0; the MCU sends the video data sent from the terminal originally viewed by the broadcast source terminal to the broadcast source. So that the switching of the terminal viewed by the broadcast source is completed.

### Implementation example two: a video conference with a low bandwidth and a multi picture

The multi-picture conference means that in the conference, the MCU synthesizes videos from multiple conference terminals into one picture and sends the one picture to other terminals for viewing. On the basis of this embodiment, the video conference low-bandwidth control module only needs to restore the uplink bandwidth of the terminal to be synthesized for implementing the multi-picture conference. Code streams of these video conference terminals are uploaded to the MCU for synthesis, and the synthesized picture is sent to the multicast address, where these terminals are terminals whose uplink bandwidths are restored. In a multi-picture conference mode, an increasing amount of the network uplink bandwidth is a sum of the synthesized terminal bandwidth, and the downlink bandwidth remains unchanged.

### Implementation example three: a video conference with a low-bandwidth distributed network

For large conferences held across regions, physical locations in which the video conference terminals are located are overall scattered and partially centralized, such as holding a provincial and municipal level conference, the conference terminals of such conference are distributed in the provincial capital and multiple cities. If the conference is held in a conventional mode, the conference terminals in each city occupy the network between the provincial capital and cities, which results in a greatly occupation of the line bandwidth between the provincial capital and cities and causes network congestion. When such video conference is held, multiple multicast sources are added to the conference multicast in this embodiment, and the MCU delivers one path of multicast data to each area. The terminals of the each area acquire the conference video stream from the multicast source of the each area. The downlink bandwidth between the provincial capital and cities is one path of video bandwidth and bandwidths occupied by all terminal audios. The video conference low-bandwidth control module controls the bandwidths of all terminals in the conference. The downlink bandwidth of the video processed by the MCU is a sum of a path of bandwidth sent to the broadcast source and all multicast sending bandwidths sent to each area. There are still two paths of uplink bandwidths: the bandwidth of the broadcast source and the bandwidth of the terminal viewed by the broadcast source.

When the video conference uses a network cascaded by multiple-MCUs, uplink and downlink of the cascaded line between the MCUs occupy one path of bandwidth resources. The conference on each MCU is networked by using the same technology described in the implementation example one.

### Implementation example four: a video conference with low bandwidth and multi capacity

Since a video conference has many conference terminals, and performance and bandwidth of the terminals are not necessarily the same. In this case, a multi-capacity conference needs to be held, that is, the conference terminals join in the conference with different capabilities. For the multi-capability conference, the MCU needs to send to the conference terminal video corresponding to the capability of the conference terminal, so as to ensure that the conference terminal can watch the conference normally. When holding a multi-capacity and low-bandwidth conference, the MCU first needs to group the terminals according to their capabilities, such as a group of terminals with a resolution of 1080P, a group of terminals with a resolution of 720P and a group of terminals in a common intermediate format. When holding a video conference, multiple multicast sources are added to the conference multicast in this embodiment, so as to generate a multicast source for each group with a corresponding capability. The MCU encodes the broadcast source video into videos satisfying these capabilities and sends the encoded videos to the corresponding multicast sources. The video conference terminals also join in the corresponding multicast group according to their respective capabilities, and acquire videos matching with their respective capabilities for viewing. The video conference low-bandwidth control module controls the bandwidths of all terminals in the conference. The downlink bandwidth of the MCU processing video is a sum of a bandwidth sent to the broadcast source and all bandwidths sending to each multicast source. There are still two paths of uplink bandwidths: the bandwidth of the broadcast source and the bandwidth of the terminal viewed by the broadcast source.

It can be seen from the above embodiments that the method and apparatus described in this embodiment can effectively reduce network bandwidth occupation and network congestion, and a large increasing of the number of terminals participating in the conference cannot significantly increase network overhead.

### Embodiment four

The embodiment of the present disclosure further provides a storage medium. The storage medium includes stored programs where the programs, when executed, perform the method of any one of the embodiments described above.

In an embodiment, the storage medium may be configured to store program codes for executing steps S1 and S2 described below.

In step S1, video data of a first terminal participating in a video conference is instructed to be sent to a multicast address of the video conference, and audio data of the first terminal is instructed to be sent to a multipoint control unit (MCU).

In step S2, a conference terminal is instructed to send audio data of the conference terminal to the MCU, where the conference terminal is a terminal except the first terminal in the video conference.

In an embodiment, the storage medium may include, but is not limited to, a USB flash disk, a read-only memory (ROM), a random access memory (RAM), a mobile hard disk, a magnetic disk, an optical disk or another medium capable of storing program codes.

An embodiment of the present disclosure further provides an electronic apparatus, including a memory and a processor, where the memory is configured to store computer programs and the processor is configured to execute the computer programs for executing the steps in any one of the method embodiments described above.

In an embodiment, the electronic apparatus described above may further include a transmission device and an input and output device, where both the transmission device and the input and output device are connected to the processor described above.

In an embodiment, the processor may be configured to execute steps S1 and S2 described below through computer programs.

In step S1, video data of a first terminal participating in a video conference is instructed to be sent to a multicast address of the video conference, and audio data of the first terminal is instructed to be sent to a multipoint control unit (MCU).

In step S2, a conference terminal is instructed to send audio data of the conference terminal to the MCU, where the conference terminal is a terminal except the first terminal in the video conference.

In an embodiment, for examples in this embodiment, reference may be made to the examples described in the embodiments and optional embodiments described above, and repetition will not be made in this embodiment.

Each of modules or steps described above may be implemented by a general-purpose computing device. They may be concentrated on a single computing device or distributed on a network formed by multiple computing devices. In an embodiment, they may be implemented by program codes executable by the computing devices, so that they may be stored in a storage device and executable by the computing devices. In some circumstances, the illustrated or described steps may be executed in sequences different from those described herein, or they may be made into various integrated circuit modules, or each module or step therein may be made into a single integrated circuit module. In this way, the present disclosure is not limited to any specific combination of hardware and software.

## Claims

1. A video conference transmission method, comprising:
instructing to send video data of a first terminal participating in a video conference to a multicast address of the video conference, and send audio data of the first terminal to a multipoint control unit, MCU; and
instructing a conference terminal except the first terminal in the video conference to send audio data of the conference terminal to the MCU.

2. The method of claim 1, further comprising:
controlling the conference terminal to refuse to send uplink video data.

3. The method of claim 1, further comprising:
sending video data of a second terminal participating in the video conference to the first terminal.

4. The method of claim 3, wherein sending video data of the second terminal participating in the video conference to the first terminal comprises:
sending video data of the second terminal participating in the video conference to the MCU, sending the video data to the first terminal through the MCU.

5. The method of claim 3 or 4, wherein the video data of the first terminal comprises:
video data collected by the first terminal, and the video data of the second terminal received by the first terminal.

6. The method of claim 1, after instructing the conference terminal except the first terminal in the video conference to send the audio data of the conference terminal to the MCU, further comprising:
sending audio data received by the MCU to the first terminal and the conference terminal, and
sending the video data received by the multicast address to the conference terminal.

7. The method of claim 6, wherein sending the audio data received by the MCU to the first terminal and the conference terminal comprises:
mixing all audio data received by the MCU, and sending the mixed audio data to the first terminal and the conference terminal.

8. The method of claim 1, after instructing to send the video data of the first terminal participating in the video conference to the multicast address of the video conference, further comprising:
determining a designated terminal currently in speaking in the video conference; and
sending video data of the designated terminal to the multicast address

9. The method of claim 8, after determining the designated terminal in the video conference, further comprising:
controlling the first terminal to refuse to send uplink video data.

10. The method of claim 1, before instructing to send the video data of the first terminal participating in the video conference to the multicast address of the video conference, and send the audio data of the first terminal to the MCU, further comprising:
creating the video conference and configuring the multicast address of the video conference.

11. The method of claim 1, before instructing to send the video data of the first terminal participating in the video conference to the multicast address of the video conference, further comprising:
configuring at least one first terminal, wherein each of the at least one first terminal corresponds to a different position area.

12. The method of claim 6, wherein sending the video data received by the multicast address to the conference terminal comprises:
encoding the video data received by the MCU to obtain video data in at least one format, wherein transmission bandwidths corresponding to video data in different formats are different; and
sending the encoded video data to the conference terminal through at least one multicast address.

13. A video conference transmission method, comprising:
receiving audio data of all participating terminals in a video conference and video data of a first terminal in all participating terminals;
sending the audio data to all participating terminals, and sending the video data to a terminal except the first terminal in the video conference.

14. A multipoint control unit, MCU, comprising:
a first instruction module, which is configured to instruct to send video data of a first terminal participating in a video conference to a multicast address of the video conference, and send audio data of the first terminal to a multipoint control unit, MCU; and
a second instruction module, which is configured to instruct a conference terminal except the first terminal in the video conference to send audio data of the conference terminal to the MCU.

15. A video conference transmission apparatus, comprising:
a receiving module, which is configured to receive audio data of all participating terminals in a video conference, and video data of a first terminal in all participating terminals; and
a sending module, which is configured to send the audio data to all participating terminals, and send the video data to a terminal except the first terminal in the video conference.

16. A storage medium, which is configured to store computer programs which, when executed, perform the method of any one of claims 1 to 13.

17. An electronic apparatus, comprising a memory and a processor, wherein the memory stores a computer program, and the processor is configured to execute the computer program to perform the method according to any one of claims 1 to 13.
